# EUROPEAN PATENT SPECIFICATION

(11) **EP 0 339 699 B1**
(45) Date of publication and mention of the grant of the patent: **29.09.1993**
(21) Application number: 89200800.4
(22) Date of filing: 29.03.1989
(51) Int. Cl.: H02G 3/06

(54) **Coupling member**
Verbindungsglied
Membre de couplage

(30) Priority: 25.04.1988 NL 8801070
(43) Date of publication of application: 02.11.1989
(73) Proprietor: VAN GEEL SYSTEMS B.V., NL-5281 RS Boxtel (NL)
(72) Inventor: Van Geel, Jacobus Antonius Peter, NL-5281 JT Boxtel (NL)
(74) Representative: Hoijtink, Reinoud

(56) References cited:
- FR-A- 1 471 497
- US-A- 2 905 416

## Description

The invention relates to a coupling member as described in the preamble of claim 1. Such a coupling member is known from US-A-2,905,416.

Cable ladders of this type are disposed in a vertical or horizontal direction and coupled to one another in order to carry cables. In view of the weight of the cables it is necessary that the cable ladders obtain a rigid connection.

For coupling of cable ladders the known coupling member slides round the stile of one of the cable ladders, whereupon locking is performed by means of fingers on the coupling member being bent into the openings in the stile. The same procedure is subsequently applied to the cable ladder to be coupled. Such a procedure not only requires great accuracy, as the fingers must lie in precise register with the relevant openings in the stile, it is also very time-consuming. Moreover, it is practically impossible to disconnect the coupling member and its re-use is equally impossible.

The invention aims to provide a coupling member for cable ladders which can be arranged quickly and efficiently without special equipment.

This is achieved by the features as described in the characterizing part of claim 1.

By allowing such a coupling member to grip around two cable ladder stiles lying in line with one another this member clamps itself fixedly thereon and forms in this manner a rigid connection between the cable ladders.

By inserting a pin-like member, for example a screwdriver, into a window and supporting this against the edge of the ladder stile, the coupling member can as a result of a lever action snap into place around the channel of the cable ladder in a simple manner.

The bottom portion of the coupling member preferably displays inward facing point-shaped protrusions. Such protrusions block lengthwise movement so that in an operationally reliable manner the coupling member connects the end portions of cable ladders lying in line with one another.

The bent upper edge portion can be interrupted close to the windows.

The invention will be elucidated with reference to the drawing.

In the drawing:

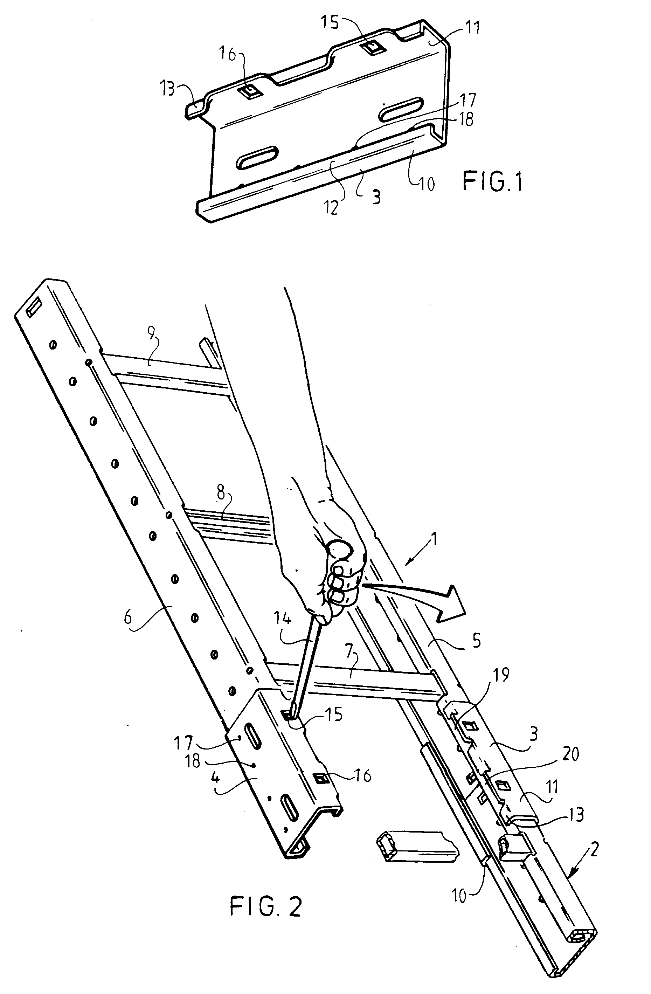

fig. 1 shows a perspective view of the coupling member according to the invention, and
fig. 2 is a perspective view of the coupling member according to fig. 1 during use.

The cable ladders 1 and 2 can be connected by coupling members according to the invention 3, 4. Coupling members 3 and 4 are identical. The cable ladders display ladder stiles 5, 6 identical to one another in the normal manner for the connection of rungs 7, 8, 9. The ladder stiles 5, 6 are channel shaped. The coupling member, for example 3, which is identical to the coupling member 4, is in respect of its form also channel-shaped and is thereby adapted with respect to dimensions to the channel shape of the ladder stiles 5, 6. The side walls 10, 11 of the coupling member 3 display bent over upper edge portions 12 and 13 respectively. During use the coupling member is first placed around the channel of the ladder stile 5 with the bent edge portion 12, after which a screwdriver 14 is subsequently inserted into one of the windows 15 or 16 and, using the screwdriver 14 serving as a lever which is supported behind the edge of the channel of the ladder stile, the coupling member is snapped in place around the cable ladders for connection. Because the channel portion of the coupling member displays inward facing point-shaped protrusions 17, 18 the coupling member is locked against lengthwise movements.

The bent upper edge portion 13 can be interrupted 19, 20 close to the windows.

## Claims

1. Coupling member (3) for coupling cable ladders (1, 2) situated in line with one another and having channel-like stiles (5, 6), consisting of a channel adapted to the form of the stile and having side walls (10, 11) with upstanding edge portions (12, 13 respectively), characterized in that the dimensions of said coupling member are such that the coupling member is clamped without altering any of its dimensions in a close fitting manner to the adjoining ladder stiles (5) and in that apertures (15, 16) are arranged in one (11) of said side walls such that the coupling member (3) can be snapped in place around the stiles (5,6) using a tool passed through the apertures (15,16) to lever the upstanding edge portion (13) over the corresponding edge of the stile (5,6).

2. Coupling member as claimed in claim 1, characterized in that the bottom portion displays inward facing point-shaped protrusions (17, 18).

3. Coupling member as claimed in claims 1-2, characterized in that the upstanding edge portion (13) is interrupted close to the apertures (15, 16).

## Patentansprüche

1. Verbindungsglied (3) zum Verbinden von Kabelleitern (1, 2), die in einer Linie miteinander angeordnet sind und kanalartige Seitenteile (5, 6) aufweisen, die aus einem Kanal bestehen, der zur Bildung des Seitenteils geeignet ist und Seitenwände (10, 11) mit aufrecht stehenden Randbereichen (12 bzw. 13) aufweist, **dadurch gekennzeichnet,** daß die Abmessungen des Verbindungsglieds solche sind, daß das Verbindungsglied ohne Veränderung irgendeiner seiner Abmessungen in einer engen Sitzweise an den benachbarten Leiterseitenteilen (5) angeklemmt ist und daß Öffnungen (15, 16) in einer (11) der Seitenwände derart vorgesehen sind, daß das Anschlußglied (3) in einer Lage rund um die Seitenteile (5, 6) unter Verwendung eines Werkzeugs, das durch die Öffnungen (15, 16) hindurchgeführt ist, einschnappend angeklemmt werden kann, um den hochstehenden Randbereich (13) über den entsprechenden Rand des Seitenteils (5, 6) hinwegzuheben.

2. Verbindungsglied nach Anspruch 1, **dadurch gekennzeichnet**, daß der Bodenteil einwärts gewandte, spitz gestaltete Vorsprünge (17, 18) aufweist.

3. Verbindungsglied nach Anspruch 1-2, **dadurch gekennzeichnet,** daß der aufrecht stehende Randbereich (13) nahe bei den Öffnungen (15, 16) unterbrochen ist.

## Revendications

1. Elément (3) d'accouplement pour accoupler des échelles pour câbles (1,2) disposées en ligne l'une avec l'autre et comportant des montants (5,6) en forme de canaux, comprenant un canal adapté à la forme des montants et comportant deux parois (10,11) de côté munies de parties de bord dressées (12,13 respectivement), caractérisé en ce que les dimensions de cet élément d'accouplement sont telles que l'élément d'accouplement est serré sans altération d'aucune de ces dimensions d'une manière très ajustée sur les montants (5) d'échelle jointifs et en ce que des ouvertures (15,16) sont agencées dans l'une (11) de ces parois de côté de telle manière que l'élément (3) d'accouplement peut être encliqueté en place autour des montants (5,6) en utilisant un outil introduit à travers les ouvertures (15,16) pour faire passer en faisant levier la partie (13) de bord dressée au dessus du bord correspondant du montant (5,6).

2. Elément d'accouplement selon la revendication 1, caractérisé en ce que la partie de fond présente des saillies (17,18) en forme de points tournées vers l'intérieur.

3. Elément d'accouplement selon les revendications 1-2, caractérisé en ce que la partie (13) de bord dressée est interrompue à proximité des ouvertures (15,16).
